# EUROPÄISCHE PATENTSCHRIFT

(11) **EP 4 237 390 B1**
(45) Veröffentlichungstag und Bekanntmachung des Hinweises auf die Patenterteilung: **04.12.2024**
(21) Anmeldenummer: 21805423.7
(22) Anmeldetag: 29.10.2021
(51) Int. Cl.: C04B 37/02

(54) **KUPFER-KERAMIK-SUBSTRAT**
COPPER-CERAMIC SUBSTRATE
SUBSTRAT EN CUIVRE-CÉRAMIQUE

(30) Priorität: 02.11.2020 DE 102020213729
(43) Veröffentlichungstag der Anmeldung: 06.09.2023
(73) Patentinhaber: Aurubis Stolberg GmbH & Co. KG, 52224 Stolberg (DE)
(72) Erfinder: CAPPI, Benjamin, 4721 Neu-Moresnet (BE); LEHMANN, Helge, 52393 Hürtgenwald (DE)
(74) Vertreter: Müller Verweyen
(86) Internationale Anmeldenummer: PCT/EP2021/080163
(87) Internationale Veröffentlichungsnummer: WO 2022/090487

(56) Entgegenhaltungen:
- WO-A1-2020/138283
- WO-A1-2020/162445
- JP-A- 2003 096 526
- US-A1- 2016 120 017

## Beschreibung

Die Erfindung betrifft ein Kupfer-Keramik-Substrat mit den Merkmalen des Oberbegriffs von Anspruch 1.

Kupfer-Keramik-Substrate (z.B. DCB, AMB) werden z.B. zur Herstellung von elektronischen Leistungsmodulen verwendet und sind ein Verbund aus einem Keramikträger mit entweder einseitig oder beidseitig darauf angeordneten Kupferschichten. Die Kupferschichten werden als Kupferhalbzeug in Form einer Kupferfolie üblicherweise mit einer Dicke von 0,1 mm bis 1,0 mm vorgefertigt und durch ein Verbindungsverfahren mit dem Keramikträger verbunden. Solche Verbindungsverfahren sind auch als DCB (Direct Copper Bonding) oder als AMB (Active Metal Brazing) bekannt. Bei einer höheren Festigkeit des Keramikträgers können jedoch auch Kupferlagen oder Kupferschichten mit einer noch größeren Dicke aufgebracht werden, was hinsichtlich der elektrischen und thermischen Eigenschaften grundsätzlich von Vorteil ist.

Als Keramikträger werden Keramikplatten z.B. aus Mullit, Al₂O₃, Si₃N₄, AlN, ZTA, ATZ, TiO₂, ZrO₂, MgO, CaO, CaCO₃ oder aus einer Mischung wenigstens zweier dieser Materialien verwendet.

Es ist bekannt, dass Kupfer-Keramik-Substrate mit einer Kupferschicht mit einem feinen Gefüge, beispielsweise mit einer mittleren Korngröße von maximal 100 *µ*m, zumindest auf der freien, dem Keramikträger abgewandten Oberfläche grundsätzlich Vorteile hinsichtlich der Eignung für optische Inspektion, für die Bondfähigkeit beim Feindrahtbonden für Drahtdurchmesser kleiner 50 *µ*m, dem Ätzverhalten für feinste Strukturen, der Korngrenzenausbildung, der Galvanisierbarkeit und der Weiterverarbeitung im Allgemeinen haben. Dementsprechend ist ein feines und homogenes Gefüge in der Kupferschicht, vor allem auf der freien Oberfläche, vorteilhaft. Darüber hinaus bietet ein feines und somit härteres Gefüge höheren mechanischen Widerstand gegenüber mechanischen Beschädigungen (z.B. Kratzer). Die Prozessführung beim DCB-Verfahren findet knapp unterhalb des Schmelzpunktes von Kupfer statt bei Temperaturen >1050°C. Die Lötprozesse beim AMB-Verfahren finden bei Temperaturen ≥800°C statt. Der thermische Einfluss in den Herstellungsprozessen AMB und DCB vergröbert das Kupfer, wobei diese Tendenz mit steigender Reinheit des Kupfers zunimmt. Daher ist eine höhere Beständigkeit des Kupfers bzw. der Kupferlegierung gegenüber Grobkornbildung erforderlich.

Ein höherer Anteil von Legierungselementen im Kupfer, also Kupfer mit geringerer Reinheit, steht dabei diametral zu den Anforderungen an die Leitfähigkeit der Kupferschicht, welche entsprechend der Anforderungen in der Endanwendung des Kupfer-Keramik-Substrats im Bereich von mindestens 55 MS/m liegt. Ferner soll das Kupfer-Keramik-Substrat kostengünstig herstellbar sein.

US2016/120017 zeigt Kupferfolien mit einer Reinheit von 99,90 Gew.-%, die 180 ppm Ag oder 100 ppm Ag und kein Sauerstoff enthalten können. Die Kupferfolie kann mit einem Keramiksubstrat laminiert werden. 1

WO2020/162445 zeigt die Verbindung einer sehr reinen Kupferplatte mit einem Keramiksubstrat. Phosphor wirkt das kornverfeinernde Verhalten der Elemente, die Kornwachstum bewirken, entgegen. Daher wird die Anwesenheit von Phosphor in der Kupferplatte bis auf 1 ppm eingeschränkt.

Vor diesem Hintergrund liegt der Erfindung die Aufgabe zugrunde, ein Kupfer-Keramik-Substrat bereitzustellen, welches eine feine und homogene Gefügestruktur und eine hohe Leitfähigkeit aufweist sowie kostengünstig herzustellen ist.

Erfindungsgemäß wird zur Lösung der Aufgabe ein Kupfer-Keramik-Substrat mit den Merkmalen des Anspruchs 1 vorgeschlagen. Weitere bevorzugte Weiterentwicklungen sind den Unteransprüchen zu entnehmen.

Es wird daher ein Kupfer-Keramik-Substrat mit einem Keramikträger und mindestens einer mit einer Oberfläche des Keramikträgers verbundenen Kupferschicht vorgeschlagen. Die Kupferschicht weist einen Anteil von wenigstens 99,5% Cu (Kupfer) auf. Die Kupferschicht weist weiter einen Anteil von mindestens 50 ppm Ag (Silber) und einen Anteil von maximal 3000 ppm Ag auf, und auch 0,1-30 ppm P. Die Kupferschicht kann weitere Anteile von anderen Elementen erhalten.

Das Kupfer-Keramik-Substrat weist in vorteilhaften Ausführungsformen zwei Kupferschichten auf, welche jeweils mit einer Oberfläche des Keramikträgers verbunden sind.

Es wird weiterhin eine vorteilhafte Ausführungsform vorgeschlagen, wobei die Kupferschicht einen Anteil von wenigstens 99,7% Cu (Kupfer), beispielsweise 99,8% Cu, aufweist.

In der Kupferschicht oder in den Kupferschichten des Kupfer-Keramik-Substrats kann durch die vorgeschlagenen Anteile eine Feinkornbildung erreicht werden. Es bildet sich ein feines und homogenes Gefüge in der Kupferschicht aus. Es können dabei gemittelte Korngrößen von maximal 100 *µ*m erreicht werden, welche auch bei den hohen geforderten Prozesstemperaturen eingehalten werden können.

Gemäß einer vorteilhaften Ausführungsform wird vorgeschlagen, dass die Kupferschicht eine gemittelte Korngröße zwischen 40 *µ*m und 100 *µ*m, weiter vorzugsweise zwischen 40 *µ*m und 80 *µ*m, aufweist. Die gemittelte Korngröße kann weiterhin vorzugsweise zwischen 40 *µ*m und 60 *µ*m betragen, weiter beispielsweise 50 *µ*m betragen. Die Standardabweichung der gemittelten Korngröße kann beispielsweise kleiner als 30 *µ*m sein. Dementsprechend erfüllen die Kupferschichten insbesondere die freie Oberfläche des Kupfersubstrats bzw. der Kupferschichten hohe Anforderungen an eine feine und homogene Gefügestruktur für diverse Anwendungen. Die Kupferschicht ist somit besonders gut geeignet für eine optische Inspektion und für die Bondfähigkeit beim Feindrahtbonden. Weiterhin zeigt die Kupferschicht aufgrund der feinen und homogenen Gefügestruktur ein besonders gutes Ätzverhalten für feinste Strukturen sowie eine besondere Eignung für galvanische Beschichtungsverfahren, insbesondere wegen besonders flachen Korngrenzengräben und der damit verbundenen niedrigen Rauhigkeit. Homogene und konstante mechanische Eigenschaften der Oberfläche und des Gefüges helfen gleichbleibende Eigenschaften in Weiterverarbeitungsprozessen zu erreichen. Ein entsprechender Weiterverarbeitungsprozess kann beispielsweise das Drahtbonden mittels Ultraschallverfahren sein, wobei Bonddrähte mit Durchmessern beispielsweise im Bereich von 10 bis 100*µ*m punktgenau gefügt werden müssen. Hierbei ist die Gefügehomogenität in den Kontaktierungspunkten der Bonddrähte von großer Bedeutung. Durch die Feinkornbildung kann zudem eine erhöhte Festigkeit der Kupferschicht entsprechend der Hall-Petch-Beziehung erreicht werden.

Die Oberfläche der Kupferschicht eignet sich besonders für das Auflöten von Chips, insbesondere bei einer voranschreitenden Miniaturisierung der Chips, da das homogene und feine Gefüge Spannungsgradienten im Bereich von aufgelöteten Chips verringern kann, was die Qualität der Lötung sowie die Lebensdauer der Lotverbindung gegenüber einem groben und inhomogenen Gefüge erhöht.

Das vorgeschlagene Kupfer-Keramik-Substrat bietet gleichzeitig eine hohe Leitfähigkeit > 55 MS/m in der oder in den Kupferschichten aufgrund des hohen Kupfergehalts.

Ein besonderer Kostenvorteil ergibt sich daraus, dass das Kupfer-Keramik-Substrat sowohl mittels Active Metal Brazing (AMB) als auch durch Direct Copper Bonding (DCB) herstellbar ist. Insbesondere kann das Kupfer-Keramik-Substrat mittels AMB auch mit Ag-freien Loten hergestellt werden, die höhere Löttemperaturen ≥1000°C erfordern. Das Kupfer-Keramik-Substrat ist ferner über weitere thermische Fügeverfahren, beispielsweise thermal diffusion bonding, herstellbar. Das vorgeschlagene Kupfer-Keramik-Substrat weist dementsprechend eine hohe Beständigkeit gegenüber Grobkornbildung aus.

Es wird vorgeschlagen, dass die Kupferschicht eine Eindringhärte von mindestens 0,7 GPa für Eindringtiefen zwischen 0,4 *µ*m bis 0,6 *µ*m aufweist.

Es wird ferner vorgeschlagen, dass die Kupferschicht eine Eindringhärte von mindestens 0,8 GPa für Eindringtiefen zwischen 0,1 *µ*m und 0,25 *µ*m aufweist.

Die hohe Oberflächenhärte der Kupferschicht vor allem für niedrige Eindringtiefen <1*µ*m, welche insbesondere mittels tiefenaufgelöster QCSM-Methode bestimmt werden kann, ergibt eine höhere Widerstandsfähigkeit gegenüber mechanischen Einflüssen (beispielsweise eine höhere Resistenz gegen Kratzer) bei Weiterverarbeitungsprozessen oder auch beim Transport zu diesen Prozessen. Es kann somit eine höhere Oberflächenqualität sichergestellt werden. Ebenfalls ist eine entsprechend hohe Oberflächenhärte im aufgezeigten Bereich von Vorteil für eine Vielzahl von Weiterverarbeitungsverfahren.

Gemäß einer Weiterentwicklung wird vorgeschlagen, dass die Kupferschicht einen Anteil von maximal 800 ppm Ag aufweist. Dies kann insbesondere zu einer Kostenreduktion führen.

Es ist vorgeschrieben, dass die Kupferschicht einen Anteil von maximal 30 ppm P (Phosphor) aufweist. Es wurde erkannt, dass die Anwesenheit von Phosphor das positive, kornverfeinernde Verhalten der vorgeschlagenen Legierung unterdrücken kann. Dies gilt insbesondere für kommerziell gehandeltes Kupfer, welches regelmäßig mehr Phosphor enthalten kann. Es hat sich herausgestellt, dass durch die vorgeschlagene Begrenzung des P-Gehalts der negative Einfluss wirkungsvoll reduziert werden kann.

Weiter ist vorgeschrieben, dass die Kupferschicht einen Anteil von mindestens 0,1 ppm P aufweist. Eine weitere Absenkung des Anteils Phosphor erreicht keine weitere Verbesserung der Eigenschaften der Kupferschicht.

Gemäß einer bevorzugten Ausführungsform weist die Kupferschicht einen Anteil von maximal 10 ppm O (Sauerstoff), weiter vorzugsweise maximal 5 ppm O, auf. Ein entsprechend niedriger Sauerstoffanteil erreicht eine ausreichende Wasserstoffbeständigkeit, so dass verschiedene Verfahrensschritte unter Wasserstoffatmosphäre erfolgen können. Gleichzeitig wirkt sich ein geringer Sauerstoffgehalt, insbesondere von maximal 5 ppm O, positiv auf die Leitfähigkeit der Kupferschicht aus.

Es wird weiter vorgeschlagen, dass die Kupferschicht einen Anteil von mindestens 0,1 ppm O aufweist. Eine weitere Absenkung des Anteils Sauerstoff erreicht keine weitere Verbesserung der Eigenschaften der Kupferschicht.

Weiter wird vorgeschlagen, dass
- die Kupferschicht einen Anteil der Elemente Cd, Ce, Ge, V, Zn von jeweils minimal 0,01 ppm bis maximal 1 ppm aufweist, wobei
- die Kupferschicht gemäß einer weiteren bevorzugten Ausführungsform einen Anteil der Elemente Cd, Ce, Ge, V, Zn von insgesamt mindestens 0,1 ppm und maximal 5 ppm aufweist. Hierdurch kann das Erreichen einer hohen Leitfähigkeit und einer entsprechenden feinen Gefügestruktur vereinfacht werden.

Weiter wird vorgeschlagen, dass
- die Kupferschicht einen Anteil der Elemente Bi, Se, Sn, Te von jeweils minimal 0,01 bis maximal 2 ppm aufweist, wobei
- die Kupferschicht gemäß einer weiteren bevorzugten Ausführungsform einen Anteil der Elemente Bi, Se, Sn, Te von insgesamt mindestens 0,1 ppm und maximal 8 ppm aufweist. Hierdurch kann das Erreichen einer hohen Leitfähigkeit und einer entsprechenden feinen Gefügestruktur vereinfacht werden.

Weiter wird vorgeschlagen, dass
- die Kupferschicht einen Anteil der Elemente Al, Sb, Ti, Zr von jeweils minimal 0,01 ppm bis maximal 3 ppm aufweist, wobei
- die Kupferschicht gemäß einer weiteren bevorzugten Ausführungsform einen Anteil der Elemente Al, Sb, Ti, Zr von insgesamt mindestens 0,1 ppm und maximal 10 ppm aufweist. Hierdurch kann das Erreichen einer hohen Leitfähigkeit und einer entsprechenden feinen Gefügestruktur vereinfacht werden.

Weiter wird vorgeschlagen, dass
- die Kupferschicht einen Anteil der Elemente As, Co, In, Mn, Pb, Si von jeweils minimal 0,01 bis maximal 5 ppm aufweist, wobei
- die Kupferschicht gemäß einer weiteren bevorzugten Ausführungsform einen Anteil der Elemente As, Co, In, Mn, Pb, Si von insgesamt mindestens 0,1 ppm und maximal 20 ppm aufweist. Hierdurch kann das Erreichen einer hohen Leitfähigkeit und einer entsprechenden feinen Gefügestruktur vereinfacht werden.

Weiter wird vorgeschlagen, dass
- die Kupferschicht einen Anteil der Elemente B, Be, Cr, Fe, Mn, Ni, S von jeweils minimal 0,01 bis maximal 10 ppm, wobei
- die Kupferschicht gemäß einer weiteren bevorzugten Ausführungsform einen Anteil der Elemente B, Be, Cr, Fe, Mn, Ni, S von insgesamt mindestens 0,1 ppm und maximal 50 ppm aufweist. Hierdurch kann das Erreichen einer hohen Leitfähigkeit und einer entsprechenden feinen Gefügestruktur vereinfacht werden.

Es wird weiter vorgeschlagen, dass die Kupferschicht einen Anteil der Elemente Cd, Ce, Ge, V, Zn, Bi, Se, Sn, Te, Al, Sb, Ti, Zr, As, Co, In, Mn, Pb, Si, B, Be, Cr, Fe, Mn, Ni, S einschließlich weiterer Verunreinigungen von maximal 50 ppm aufweist. Hierdurch kann das Erreichen einer hohen Leitfähigkeit und einer entsprechenden feinen Gefügestruktur vereinfacht werden.

Die genannten Anteile beziehen sich jeweils auf die Gewichtsanteile.

Die Erfindung wird im Folgenden anhand bevorzugter Ausführungsformen unter Bezugnahme auf die beigefügten Figuren erläutert. Dabei zeigt
- Fig. 1: ein Kupfer-Keramik-Substrat mit einer Kupferschicht;
- Fig. 2: ein Kupfer-Keramik-Substrat mit zwei Kupferschichten;
- Fig. 3: ein Schliffbild einer erfindungsgemäßen feinen Kupferschicht eines Kupfer-Keramik-Substrats nach dem DCB-Prozess;
- Fig. 4: ein Schliffbild einer erfindungsgemäßen feinen Kupferschicht eines Kupfer-Keramik-Substrats nach dem AMB-Prozess;
- Fig. 5: Korngrößenverteilung von erfindungsgemäßen Kupferschichten eines Kupfer-Keramik-Substrats nach dem DCB-Prozess und AMB Prozess;
- Fig. 6: Nanohärte von erfindungsgemäßen Kupferschichten eines Kupfer-Keramik-Substrats nach dem DCB-Prozess und AMB-Prozess im Vergleich zur einem Referenzkupfer; und
- Fig. 7: Schliffbilder mit Kennzeichnung des flächenmäßigen Anteils von Kristallzwillingen erfindungsgemäßer Kupferschichten eines Kupfer-Keramik-Substrats nach dem DCB-Prozess und AMB-Prozess im Vergleich.

Leistungsmodule sind Halbleiterbauelemente der Leistungselektronik und werden als Halbleiterschalter eingesetzt. Sie enthalten in einem Gehäuse mehrere vom Kühlkörper elektrisch isolierte Leistungshalbleiter (Chips). Diese werden auf eine metallisierte Oberfläche einer elektrisch isolierenden Platte (z.B. aus Keramik) mittels Löten oder Bonden aufgebracht, damit einerseits die Wärmeabgabe in Richtung Bodenplatte, andererseits aber auch die elektrische Isolierung gewährleistet ist. Der Verbund aus metallisierten Schichten und isolierender Platte wird als Kupfer-Keramik-Substrat 1 bezeichnet und wird großtechnisch über die sogenannte DCB-Technologie (Direct Copper Bonding) oder über die sogenannte AMB-Technologie (Active Metal Brazing) realisiert.

Die Kontaktierung der Chips wird durch Bonden mit dünnen Bonddrähten realisiert. Darüber hinaus können weitere Baugruppen unterschiedlichster Funktion (z.B. Sensoren, Widerstände) vorhanden und integriert sein.

Zur Herstellung eines DCB-Substrates werden Keramikträger 2 (z.B. Al₂O₃, Si₃N₄, AIN, ZTA, ATZ) ober- und unterseitig mit Kupferschichten 3, 4 in einem Bondprozess miteinander verbunden. In Vorbereitung auf diesen Prozess können die Kupferschichten 3, 4 vor dem Auflegen auf den Keramikträger 2 oberflächlich oxidiert (z.B. chemisch oder thermisch) und anschließend auf den Keramikträger 2 aufgelegt werden. Die Verbindung (Bonding) entsteht in einem Hochtemperaturprozess ≥1050°C, wobei auf der Oberfläche der Kupferschicht 3, 4 eine eutektische Schmelze entsteht, die mit dem Keramikträger 2 eine Verbindung eingeht. Diese Verbindung besteht beispielsweise im Falle von Kupfer (Cu) auf Aluminiumoxid (Al₂O₃) aus einer dünnen Cu-Al-Spinellschicht.

Zur Herstellung eines AMB-Substrates werden die Kupferschichten 3, 4 auf einen Keramikträger 2 mittels eines geeigneten Hartlots aufgelötet. Der Lötprozess findet im Vakuum oder in geeigneter Schutzatmosphäre, z.B. Wasserstoff, bei Temperaturen >800°C statt. Es kann sich dabei um Batchprozesse oder kontinuierliche Prozesse handeln. Die Verwendung silberfreier Lote (z.B. CuAlTiSi-Lote) erhöht die erforderliche Prozesstemperatur, so dass diese Lötprozesse bei Temperaturen bis 1050°C stattfinden können.

Darüber hinaus können zur Herstellung des Kupfer-Keramik-Substrats 1 auch Verfahren verwendet werden, bei denen die Verbindung zwischen Kupfer und Keramik über einen diffusionsbasierten Fügeprozess hergestellt wird (z.B. thermal diffusion bonding). Die Prozesstemperaturen liegen hier ebenfalls ≥1000°C.

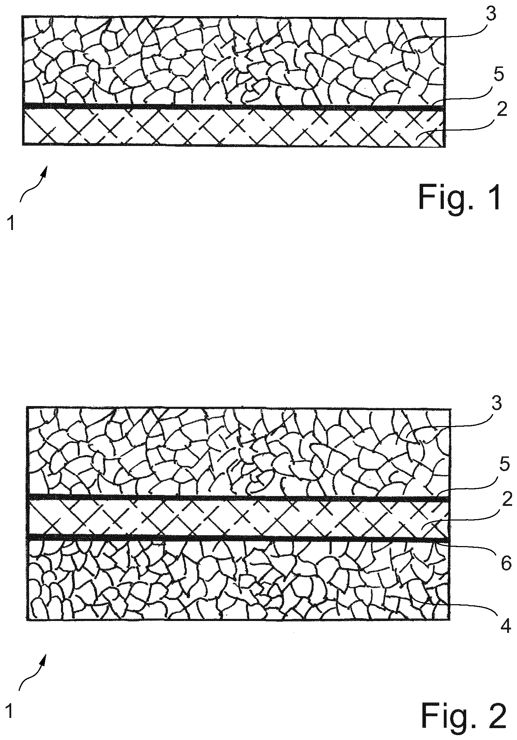

In Figur 1 ist eine schematische Darstellung eines Ausführungsbeispiels eines Kupfer-Keramik-Substrats 1 mit einem Keramikträger 2 und einer vorgeschlagenen Kupferschicht 3 gezeigt. Die Kupferschicht 3 weist einen hohen Kupferanteil von wenigstens 99,5% Cu auf, wobei ein Anteil Silber von wenigstens 50 ppm Ag und maximal 3000 ppm Ag vorgesehen ist.

Die Kupferschicht 3 kann z.B. nach dem eingangs beschriebenen DCB-Verfahren oder mit dem AMB-Verfahren mit dem Keramikträger 2 verbunden sein, so dass diese durch eine stoffschlüssige Verbindung in der Oberflächenrandzone 5 mit dem Keramikträger 2 verbunden ist.

In der Figur 2 ist eine schematische Darstellung eines Ausführungsbeispiels eines Kupfer-Keramik-Substrats 1 mit einem Keramikträger 2 analog zum Ausführungsbeispiel der Figur 1 gezeigt, wobei abweichend zwei vorgeschlagene Kupferschichten 3 und 4 vorgesehen sind. Die Kupferschichten 3 und 4 weisen einen hohen Kupferanteil von wenigstens 99,5% Cu auf, wobei ein Anteil Silber von wenigstens 50 ppm Ag und maximal 3000 ppm Ag vorgesehen ist.

Die Kupferschichten 3 und 4 können z.B. nach dem eingangs beschriebenen DCB-Verfahren oder mit dem AMB-Verfahren mit dem Keramikträger 2 verbunden sein, so dass diese durch eine stoffschlüssige Verbindung in den jeweiligen Oberflächenrandzonen 5 und 6 mit dem Keramikträger 2 verbunden sind.

Die Kupferschichten 3 und 4 mit den vorgeschlagenen Anteilen Cu und Ag, insbesondere mit den vorgeschlagenen O-Anteilen von maximal 10 ppm O, weiter bevorzugt maximal 5 ppm O, sind hochleitfähige Cu-Werkstoffe und weisen eine Leitfähigkeit von 55 MS/m, bevorzugt mindestens 57 MS/m und besonders bevorzugt von mindestens 58 MS/m auf.

Die Zugabe von Ag, die Limitierung des Phosphor-Anteils auf maximal 30 ppm P sowie das Vorhandensein weiterer Elemente in den Kupferschichten 3, 4 ermöglicht es, dass die vergleichsweise geringen Anteile Ag ausreichen, einer Vergröberung des Gefüges der Kupferschichten 3, 4 durch den thermischen Einfluss im AMB-Verfahren oder DCB-Verfahren entgegen zu wirken, so dass die Kupferschichten 3, 4 des Kupfer-Keramik-Substrats 1 ein feines und homogenes Gefüge aufweisen. Dies ist beispielsweise besonders geeignet für das Ätzen feinster Strukturen. Weiterhin wird durch das feine Gefüge eine erhöhte Festigkeit der Kupferschichten 3, 4 und damit ein erhöhter Widerstand gegen mechanische Beschädigung entsprechend der Hall-Patch-Beziehung erreicht.

Die Kupferhalbzeuge der Kupferschichten 3 und 4 können eine Dicke von 0,1 bis 1,0 mm aufweisen und werden in großen Abmaßen auf den Keramikträger 2 aufgelegt und durch das DCB-Verfahren mit dem Keramikträger 2 verbunden. Anschließend wird das großflächige Kupfer-Keramik-Substrat 1 in kleinere Einheiten geschnitten und weiterverarbeitet. Alternativ kann die Verbindung durch das AMB-Verfahren erfolgen.

Derartige Kupferhalbzeuge für die Kupferschichten 3, 4 lassen sich beispielsweise in Fertigungsverfahren unter Sauerstoffabschluss herstellen.

Zusätzlich können die Kupferschichten 3 und 4 einen Anteil der Elemente Cd, Ce, Ge, V, Zn von jeweils minimal 0,01 bis maximal 1 ppm aufweisen und/oder einen Anteil der Elemente Bi, Se, Sn, Te von jeweils minimal 0,01 bis maximal 2 ppm aufweisen und/oder einen Anteil der Elemente Al, Sb, Ti, Zr von jeweils minimal 0,01 bis maximal 3 ppm aufweisen und/oder einen Anteil der Elemente As, Co, In, Mn, Pb, Si von jeweils minimal 0,01 bis maximal 5 ppm aufweisen und/oder einen Anteil der Elemente B, Be, Cr, Fe, Mn, Ni, S von jeweils minimal 0,01 bis maximal 10 ppm aufweisen. Die aufgezählten zusätzlichen Elemente können durch Dotierung während des Schmelzprozesses unmittelbar vor dem Gießen bewusst in das Gefüge eingebracht sein oder auch aufgrund von Verunreinigungen bereits bei der Herstellung der Kupferhalbzeuge in den Kupferschichten 3 und 4 vorhanden sein. Jedenfalls sollte der Anteil dieser Elemente einschließlich weiterer Verunreinigungen bevorzugt maximal 50 ppm betragen.

Weiter können die Kupferschichten 3, 4 gemäß einer weiteren bevorzugten Ausführungsform einen Anteil der Elemente Cd, Ce, Ge, V, Zn von insgesamt mindestens 0,05 ppm und maximal 5 ppm, einen Anteil der Elemente Bi, Se, Sn, Te von insgesamt mindestens 0,1 ppm und maximal 8 ppm, einen Anteil der Elemente Al, Sb, Ti, Zr von insgesamt mindestens 0,1 ppm und maximal 10 ppm einen Anteil der Elemente As, Co, In, Mn, Pb, Si von insgesamt mindestens 0,1 ppm und maximal 20 ppm und einen Anteil der Elemente B, Be, Cr, Fe, Mn, Ni, S von insgesamt mindestens 0,1 ppm und maximal 50 ppm aufweisen.

Die beschriebenen Mengenanteile der Elemente können helfen, um die vorgeschlagene mittlere Korngröße des Gefüges zu erzielen. Dabei ist die Gefügeausbildung insbesondere auf die durch die Elemente bewirkte Kornfeinung des Gefüges und auf die Verminderung der Sekundärrekristallisation in dem Gefüge beim Bondprozess zurückzuführen.

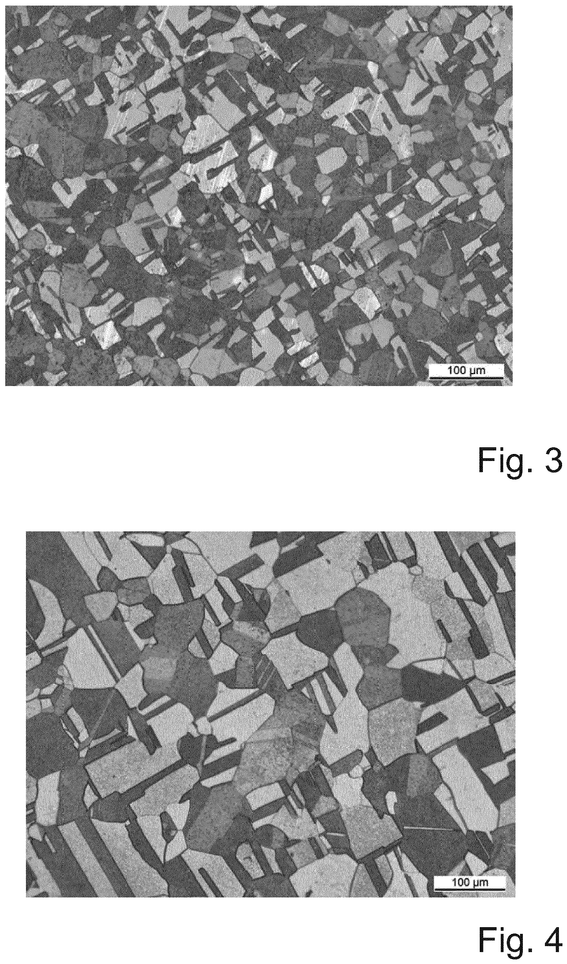

In Figur 3 ist ein Schliffbild einer der Kupferschichten 3, 4 des Kupfer-Keramik-Substrats 1 gezeigt, welches in einem DCB-Verfahren hergestellt wurde. Das Gefüge der Kupferschichten 3, 4 zeichnet sich in diesem Ausführungsbeispiel durch eine mittlere Korngröße von 56,5 *µ*m mit einer Standardabweichung von 28,5 *µ*m aus und liegt somit unterhalb der Anforderungen von 100 *µ*m mittlerer Korngröße. Die Korngrößen wurden gemäß Linienschnittverfahren (DIN EN ISO 2624) bestimmt.

In Figur 4 ist ein Schliffbild einer der Kupferschichten 3, 4 des Kupfer-Keramik-Substrats 1 gezeigt, welches in einem AMB-Verfahren hergestellt wurde. Das Gefüge der Kupferschichten 3, 4 zeichnet sich in diesem Ausführungsbeispiel durch eine mittlere Korngröße von 78 *µ*m mit einer Standardabweichung von 34,6 *µ*m aus und liegt somit unterhalb der Anforderungen von 100 *µ*m mittlerer Korngröße. Die Korngrößen wurden gemäß Linienschnittverfahren (DIN EN ISO 2624) bestimmt.

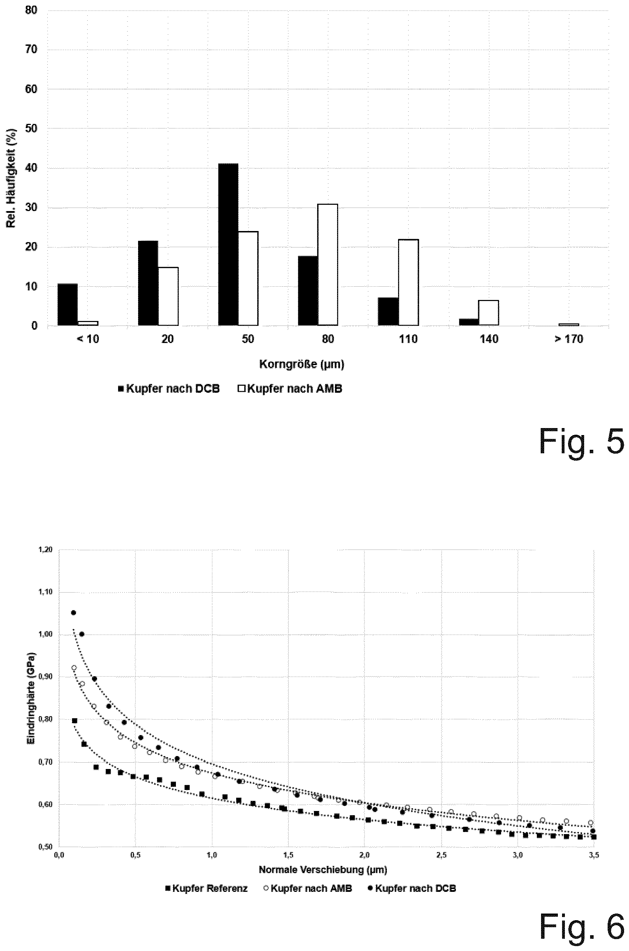

Die Korngrößenverteilung der beiden Ausführungsbeispiele entsprechend der Figuren 3 und 4 ist in der Figur 5 dargestellt. Sowohl bei einer Herstellung nach DCB-Verfahren als auch nach AMB-Verfahren ergibt sich eine monomodale Korngrößenverteilung in den bzw. der Kupferschicht 3, 4.

In Figur 6 sind Eindringhärten in GPa über eine normale Verschiebung in *µ*m einer Nanohärtemessung mittels tiefenaufgelöster QCSM-Methode für eine Kupferschicht 3, 4 eines nach DCB-Verfahren (schwarze Kreise), nach AMB-Verfahren (weiße Kreise) und einer Referenzkupferschicht (schwarze Quadrate) aufgetragen. Die Nanohärtemessung wurden mit mehreren Belastungsstufen durchgeführt, wobei die maximale Prüfkraft 100 mN betrug. Als Indenter wurde ein Berkovich-Eindringkörper genutzt. Die Eindringhärte ist dementsprechend in Abhängigkeit der Eindringtiefe aufgetragen. Die Oberflächen der Kupferschichten 3, 4 der erfindungsgemäßen Kupfer-Keramik-Substrate 1 zeigen über beide Herstellungswege eine höhere Eindringhärte über alle Eindringtiefen bis 3,5 *µ*m als das Referenzkupfer. Es hat sich dabei gezeigt, dass mit der vorgeschlagenen Legierung eine deutlich verbesserte Eindringhärte für geringe Eindringtiefen bzw. oberflächennahe Bereich der Kupferschichten 3, 4 erreicht werden kann. Dies erhöht unter anderem die Resistenz gegen Kratzer und ist für die Widerstandsfähigkeit gegenüber mechanischen Einflüssen bei Weiterarbeitungsprozessen vorteilhaft. Diese Eigenschaften der hohen Eindringhärte für oberflächennahe Bereich von weniger als beispielsweise 2 *µ*m, weiter beispielsweise 1 *µ*m oder auch beispielsweise 0,5 *µ*m ist zudem für das Aufbringen feinster Bonddrähte im Ultraschallschweißverfahren vorteilhaft.

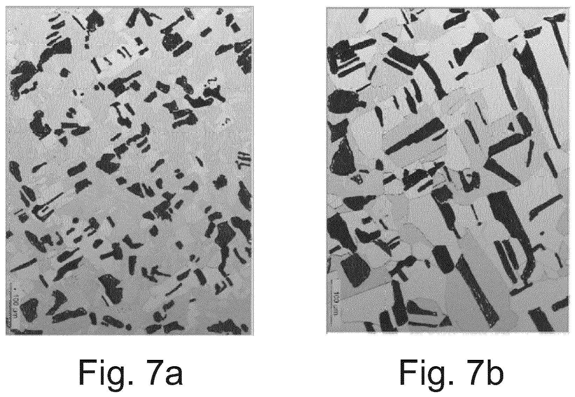

Weiterhin sind die Gefüge der Kupferschichten 3, 4 des nach dem DCB-Verfahren als auch nach dem AMB-Verfahren hergestellten erfindungsgemäßen Kupfer-Keramik-Substrats 1 durch eine vermehrte Zwillingsbildung geprägt. Zwillinge können als Streifen, die dem in die Zwillingsstellung geklappten mittleren Bereich eines Korns entsprechen, im Schliffbild erkannt werden. Die Gefügestruktur kann sich entsprechend des gewählten Herstellungsweges, beispielsweise DCB (Figur 7a) oder AMB (Figur 7b), des Kupfer-Keramik-Substrats 1 geringfügig unterscheiden.

Zwillingsbildung ist zwar ein bekanntes Phänomen in Kupferwerkstoffen. Im Fall des Kupfer-Keramik-Substrats 1 wird die verstärkte Zwillingsbildung im thermisch aktivierten Fügeprozess beobachtet. Es erfolgt also die thermische Zwillingsbildung im Rekristallisationsprozess. Es handelt sich um thermisch induzierte Zwillingsbildung (Glühzwillinge). Die Zwillingsbildung hat insbesondere bei feinem Gefüge einen positiven Einfluss auf die Härte des Werkstoffs.

Die Zwillinge sind in der Figur 7 dunkel eingefärbt. Entsprechend der Figur 7a ergibt sich für das Gefüge der Kupferschicht 3, 4 nach dem DCB-Verfahren ein Flächenanteil der Zwillinge von 19,4%. Für die Kupferschicht 3, 4 nach dem AMB-Verfahren entsprechend dem Ausführungsbeispiel der Figur 7b ergibt sich ein Flächenanteil der Zwillinge von 21,6%. Die genannten Flächenanteile unterscheiden sich zwar nur geringfügig von einem Referenzkupfer, es ergeben sich jedoch mehr kleinere Zwillinge, was sich bezogen auf die Härtesteigerung stärker auswirkt, als große Zwillinge in geringerer Anzahl.

## Patentansprüche

1. Kupfer-Keramik-Substrat (1) mit
- einem Keramikträger (2) und
- mindestens einer mit einer Oberfläche des Keramikträgers (2) verbundenen Kupferschicht (3,4),
**dadurch gekennzeichnet, dass**
- die Kupferschicht (3,4) einen Anteil von wenigstens 99,5% Cu aufweist,
- die Kupferschicht (3,4) einen Anteil von mindestens 50 ppm Ag aufweist, und
- die Kupferschicht (3,4) einen Anteil von maximal 3000 ppm Ag aufweist, und
- die Kupferschicht (3,4) einen Anteil von maximal 30 ppm P aufweist, und
- die Kupferschicht (3,4) einen Anteil von mindestens 0,1 ppm P aufweist. Die Anteile sind Gewichtsanteile.

2. Kupfer-Keramik-Substrat (1) nach Anspruch 1, **dadurch gekennzeichnet, dass** die Kupferschicht (3,4) eine gemittelte Korngröße zwischen 40 *µ*m und 100 *µ*m aufweist. Die Korngrößen wurden gemäß Linienschnittverfahren (DIN EN ISO 2624) bestimmt.

3. Kupfer-Keramik-Substrat (1) nach Anspruch 2, **dadurch gekennzeichnet, dass** die Kupferschicht (3,4) eine gemittelte Korngröße zwischen 40 *µ*m und 80 *µ*m aufweist.

4. Kupfer-Keramik-Substrat (1) nach einem der vorangehenden Ansprüche, **dadurch gekennzeichnet, dass** die Kupferschicht (3,4) eine Eindringhärte von mindestens 0,7 GPa für Eindringtiefen zwischen 0,4 *µ*m bis 0,6 *µ*m aufweist.

5. Kupfer-Keramik-Substrat (1) nach einem der vorangehenden Ansprüche, **dadurch gekennzeichnet, dass** die Kupferschicht (3,4) eine Eindringhärte von mindestens 0,8 GPa für Eindringtiefen zwischen 0,1 *µ*m und 0,25 *µ*m aufweist Die Nanohärtemessung wurde mittels tiefenaufgelöster QCSM-Methode ausgeführt. Die Nanohärtemessung wurde mit mehreren Belastungsstufen durchgeführt, wobei die maximale Prüfkraft 100 mN betrug. Als Indenter wurde ein Berkovich-Eindringkörper genutzt.

6. Kupfer-Keramik-Substrat (1) nach einem der vorangehenden Ansprüche, **dadurch gekennzeichnet, dass**
- die Kupferschicht (3,4) einen Anteil von maximal 10 ppm O aufweist.

7. Kupfer-Keramik-Substrat (1) nach einem der vorangehenden Ansprüche, **dadurch gekennzeichnet, dass**
- die Kupferschicht (3,4) einen Anteil von mindestens 0,1 ppm O aufweist.

8. Kupfer-Keramik-Substrat (1) nach einem der vorangehenden Ansprüche, **dadurch gekennzeichnet, dass** die Kupferschicht (3,4) einen Anteil der Elemente Cd, Ce, Ge, V, Zn, Bi, Se, Sn, Te, Al, Sb, Ti, Zr, As, Co, In, Mn, Pb, Si, B, Be, Cr, Fe, Mn, Ni, S einschließlich weiterer Verunreinigungen von maximal 50 ppm aufweist.

## Claims

1. Copper-ceramic substrate (1) comprising
- a ceramic carrier (2) and
- at least one copper layer (3, 4) bonded to a surface of the ceramic carrier (2),
**characterized in that**
- the copper layer (3, 4) has a Cu content of at least 99.5%,
- the copper layer (3, 4) has an Ag content of at least 50 ppm, and
- the copper layer (3, 4) has an Ag content of not more than 3000 ppm Ag, and
- the copper layer (3, 4) has a P content of not more than 30 ppm, and
- the copper layer (3, 4) has a P content of at least 0.1 ppm. The contents are weight fractions.

2. Copper-ceramic substrate (1) according to claim 1, **characterized in that** the copper layer (3, 4) has a mean grain size between 40 µm and 100 µm. The grain sizes were determined according to the linear intercept method (DIN EN ISO 2624).

3. Copper-ceramic substrate (1) according to claim 2, **characterized in that** the copper layer (3, 4) has a mean grain size between 40 µm and 80 µm.

4. Copper-ceramic substrate (1) according to any of the preceding claims, **characterized in that** the copper layer (3, 4) has a penetration hardness of at least 0.7 GPa for penetration depths between 0.4 µm and 0.6 µm.

5. Copper-ceramic substrate (1) according to any of the preceding claims, **characterized in that** the copper layer (3, 4) has a penetration hardness of at least 0.8 GPa for penetration depths between 0.1 µm and 0.25 µm. The nanohardness measurement was performed by means of a depth-resolved QCSM method. The nanohardness measurement were performed with a plurality of stress levels, the maximum test force being 100 mN. A Berkovich indenter was used as the indenter.

6. Copper-ceramic substrate (1) according to any of the preceding claims, **characterized in that**
- the copper layer (3, 4) has an O content of not more than 10 ppm.

7. Copper-ceramic substrate (1) according to any of the preceding claims, **characterized in that**
- the copper layer (3, 4) has an O content of at least 0.1 ppm.

8. Copper-ceramic substrate (1) according to any of the preceding claims, **characterized in that** the copper layer (3, 4) has a content of the elements Cd, Ce, Ge, V, Zn, Bi, Se, Sn, Te, Al, Sb, Ti, Zr, As, Co, In, Mn, Pb, Si, B, Be, Cr, Fe, Mn, Ni and S, including further impurities, of not more than 50 ppm.

## Revendications

1. Substrat en cuivre-céramique (1) comportant
- un support de céramique (2) et
- au moins une couche de cuivre (3, 4) reliée avec une surface du support de céramique (2),
**caractérisé en ce que**
- la couche de cuivre (3, 4) présente une quantité d'au moins 99,5 % de Cu,
- la couche de cuivre (3, 4) présente une quantité d'au moins 50 ppm d'Ag, et
- la couche de cuivre (3, 4) présente une quantité d'au maximum 3000 ppm d'Ag, et
- la couche de cuivre (3, 4) présente une quantité d'au maximum 30 ppm de P, et
- la couche de cuivre (3, 4) présente une quantité d'au moins 0,1 ppm de P. Les quantités sont des quantités en poids.

2. Substrat en cuivre-céramique (1) selon la revendication 1, **caractérisé en ce que** la couche de cuivre (3, 4) présente une taille des grains moyenne entre 40 µm et 100 µm. Les tailles des grains ont été déterminées selon le la méthode de la moyenne des interceptions linéaires (DIN EN ISO 2624).

3. Substrat en cuivre-céramique (1) selon la revendication 2, **caractérisé en ce que** la couche de cuivre (3, 4) présente une taille des grains moyenne entre 40 µm et 80 µm.

4. Substrat en cuivre-céramique (1) selon l'une quelconque des revendications précédentes, **caractérisé en ce que** la couche de cuivre (3, 4) présente une dureté à la pénétration d'au moins 0,7 GPa pour des profondeurs de pénétration entre 0,4 µm à 0,6 µm.

5. Substrat en cuivre-céramique (1) selon l'une quelconque des revendications précédentes, **caractérisé en ce que** la couche de cuivre (3. 4) présente une dureté à la pénétration d'au moins 0,8 GPa pour des profondeurs de pénétration entre 0,1 µm et 0,25 µm.
La mesure de la dureté nanométrique a été effectuée au moyen de la méthode code de spécialité commune, QCSM, basée sur la profondeur de pénétration. La mesure de la dureté nanométrique a été effectuée avec plusieurs niveaux de charge, où la charge d'essai maximale était de100 mN. On a utilisé le pénétrateur de Berkovich en tant qu'indenteur.

6. Substrat en cuivre-céramique (1) selon l'une quelconque des revendications précédentes, **caractérisé en ce que**
- la couche de cuivre (3, 4) présente une quantité d'au maximum 10 ppm d'O.

7. Substrat en cuivre-céramique (1) selon l'une quelconque des revendications précédentes, **caractérisé en ce que**
- la couche de cuivre (3, 4) présente une quantité d'au moins 0,1 ppm d'O.

8. Substrat en cuivre-céramique (1) selon l'une quelconque des revendications précédentes, **caractérisé en ce que** la couche de cuivre (3, 4) présente une quantité des éléments Cd, Ce, Ge, V, Zn, Bi, Se, Sn, Te, Al, Sb, Ti, Zr, As, Co, In, Mn, Pb, Si, B, Be, Cr, Fe, Mn, Ni, S, y compris d'autres impuretés, d'au maximum 50 ppm.
